# EUROPÄISCHE PATENTANMELDUNG

(11) **EP 4 686 411 A1**
(43) Veröffentlichungstag der Anmeldung: **04.02.2026**
(21) Anmeldenummer: 25193601.9
(22) Anmeldetag: 01.08.2025
(51) Int. Cl.: A21D 2/26, A21D 2/36, A23J 3/14, A23L 7/10, A23L 11/00, A23J 3/16, A23J 3/22

(54) **VERFAHREN ZUM HERSTELLEN EINES FLEISCHERSATZPRODUKTES**

(30) Priorität: 02.08.2024 LU 507926
(71) Anmelder: IBD International Brand Discount EOOD, 1700 Sofia (BG)
(72) Erfinder: Elsen, Wolfgang, 54662 Speicher (DE)
(74) Vertreter: Hoffmann, Jürgen

(57) **Zusammenfassung**

Die Erfindung betrifft ein Verfahren zum Herstellen eines Fleischersatzproduktes. Das Verfahren beinhaltet den Schritt des Herstellens einer Zwischenproduktmasse, die Sojamehl, Sojaproteinisolat, Weizengluten, Sojafaser, Erbsenprotein, Kichererbsenmehl, Quinoamehl, Maisstärke, Reismehl und Leinsamen beinhaltet. Das Verfahren beinhaltet außerdem den Schritt des Abteilens von mehreren Zwischenproduktstücken aus der hergestellten Zwischenproduktmasse. Das Verfahren beinhaltet darüber hinaus den Schritt des Kochens der Zwischenproduktstücke für einen Zeitraum im Bereich von 20 Minuten bis 40 Minuten, insbesondere 30 Minuten in Wasser. Danach erfolgt ein Marinieren 4 der Streifen mit einer Marinade für einen Marinierzeitraum. Danach erfolgt der Schritt des Trocknens der Streifen, vorzugsweise in einer Räucherkammer, für einen Trocknungszeitraum. Danach erfolgt der Schritt des Räucherns der Streifen in der Räucherkammer für einen Räucherzeitraum.

## Beschreibung

Die Erfindung betrifft ein Verfahren zum Herstellen eines Fleischersatzproduktes.

In der heutigen Zeit sehen sich Verbraucher, Hersteller und die Umwelt zunehmend den Herausforderungen der Fleischproduktion ausgesetzt. Die konventionelle Fleischproduktion ist nicht nur mit erheblichen ökologischen Belastungen verbunden, wie dem hohen Energie- und Wasserverbrauch sowie der Erzeugung von Treibhausgasen, sondern auch mit komplexen ethischen und gesundheitlichen Fragen. Diese Herausforderungen machen es notwendig, alternative Lösungen zu entwickeln, die sowohl umweltfreundlicher als auch gesundheitlich unbedenklicher sind.

Zahlreiche Fleischersatzprodukte sind bereits auf dem Markt, jedoch weisen viele von ihnen spezifische Nachteile auf. So sind beispielsweise die meisten pflanzlichen Ersatzprodukte wie Tofu, Tempeh oder Seitan oft nicht in der Lage, das typische Kaugefühl und die Textur von Fleisch vollständig nachzuahmen. Diese Produkte sind oft in der Herstellung energieaufwendig und können durch ihre Verarbeitungsstufen Geschmacks- und Texturdefizite aufweisen, die nicht immer den Erwartungen der Verbraucher entsprechen. Tofu und Tempeh sind beispielsweise oft eher weich und nicht immer geschmacklich auf das Profil von Fleischprodukten abgestimmt. Seitan hingegen kann zwar eine fleischähnliche Konsistenz bieten, hat jedoch in der Regel einen markanten Eigengeschmack, der nicht jedem Verbraucher zusagt.

Vor diesem Hintergrund besteht ein wachsender Bedarf an innovativen Produkten, die nicht zwingend den Geschmack oder die Textur von Fleisch imitieren, sondern stattdessen neue, einzigartige Geschmacks- und Texturerlebnisse bieten.

Aus WO 99 03359 A1 ist ein vollständig pflanzlicher Fleischersatz bekannt, der Sojaproteine, Weizengluten sowie weitere Bestandteile umfasst. Ferner ist dort ein Herstellungsverfahren beschrieben, das die folgenden Schritte umfasst: Zubereitung eines Gels durch Mischen von Sojaproteinkonzentrat und/oder isoliertem Sojaprotein mit Weizengluten und Wasser; partielle Hydratation von texturiertem Sojaprotein und/oder texturiertem Sojaproteinkonzentrat; sowie das Kochen des Teigs, der durch Mischen des Gels mit dem partiell hydratisierten Sojaprotein und den weiteren Zutaten erhalten wird. Alternativ wird in der Offenlegung auch ein Verfahren beschrieben, bei dem der Teig durch direkte Vermischung der Sojaproteine, des Wassers, des Weizenglutens und der übrigen Bestandteile zubereitet und anschließend gekocht wird.

Aus WO 2022 241 500 A1 ist ein Verfahren zur Herstellung eines vegetarischen oder veganen Lebensmittels bzw. Fleischersatzprodukts in Form eines Schichtprodukts bekannt. Dabei werden mehrere einzelne Strangeinheiten aus texturiertem Pflanzenprotein (TVP) bereitgestellt, auf mindestens einem Bereich der Oberfläche zumindest einer Strangeinheit ein Verbindungsmittel aufgebracht und die so behandelten Strangeinheiten anschließend schichtweise an- oder übereinandergelegt und mittels des Verbindungsmittels zu dem Schichtprodukt verklebt.

Aus GB 2 584 402 A ist ein Verfahren zur Herstellung eines getrockneten Fleischersatzprodukts bekannt, das aus vitalem Weizengluten, einem Produkt aus Früchten, Gemüse, Pilzen oder Mischungen davon, Wasser sowie Aromastoffen besteht. Das Verfahren umfasst dabei folgende Schritte: (i) ein Mischschritt, bei dem die organischen Produkte, Wasser und Aromastoffe vorgemischt und anschließend das vitale Weizengluten hinzugefügt und für 1 bis 60 Sekunden, bevorzugt 5 bis 30 Sekunden, durchmischt wird; (ii) ein Pressschritt, bei dem die Mischung auf eine bevorzugte Dicke von 2 bis 10 mm komprimiert wird; (iii) ein Entwässerungsschritt, bei dem die komprimierte Mischung bei einer Temperatur von 40 °C bis 80 °C getrocknet wird, um den freien Wassergehalt auf eine Wasseraktivität von 0,5 bis 0,8 aw, bevorzugt 0,5 bis 0,6 aw, zu reduzieren; sowie (iv) ein Schneideschritt, bei dem die getrocknete, komprimierte Masse in Streifen mit vorgegebener Länge und Breite geschnitten wird.

Aus EP 2 364 601 B1 ist ein strukturiertes Proteinprodukt bekannt, das wenigstens einen proteinhaltigen Inhaltsstoff umfasst. Das Proteinprodukt weist Proteinfasern auf, die wesentlich ausgerichtet sind, wobei mindestens 55 % der Proteinfasern bei Betrachtung in einer horizontalen Ebene unter einem Winkel von weniger als 45° zueinander angeordnet sind. Ferner zeichnet sich das strukturierte Proteinprodukt durch eine mittlere Scherfestigkeit von mindestens 1400 Gramm aus.

Aus WO 2022 096 498 A1 ist ein Verfahren zur Aromatisierung eines auf hochfeuchten, extrudierten pflanzlichen Proteinen basierenden Produkts bekannt. Das Verfahren umfasst dabei folgende Schritte: (a) Bereitstellung von hochfeuchten extrudierten pflanzlichen Proteinen mit einem Wassergehalt von 30 % bis 70 %, (b) Reinigung der bereitgestellten hochfeuchten extrudierten pflanzlichen Proteine durch Trocknung auf einen Wassergehalt von 25 % bis 45 %, wodurch unerwünschte Geschmacksnoten entfernt werden, sowie (c) Marinierung der getrockneten hochfeuchten extrudierten pflanzlichen Proteine durch Kontakt mit 20 % bis 40 % Gewichtsanteil mindestens einer Marinade, bis ein Wassergehalt von 70 % bis 85 % erreicht ist, um ein aromatisiertes Produkt mit reduziertem Fehlgeschmack zu erhalten.

Aus JP S63 141571 A ist ein Verfahren zur Herstellung eines lang haltbaren Lebensmittels bekannt, beispielsweise eines cremigen, teigigen, fischähnlichen, TOFU-ähnlichen oder Pudding-ähnlichen Produkts. Dabei wird ein homogenes Gemisch aus separiertem Sojaprotein (Komponente A), essbaren Fetten und Ölen (Komponente B), reduzierter Stärkehydrolysatlösung (Komponente C) und Wasser in einem bestimmten Gewichtsverhältnis hergestellt. Das Mischungsverhältnis der Komponenten A und B liegt dabei zwischen 1:3 und 3:1, wobei deren Gesamtanteil 15 bis 30 Gew.-% beträgt und die Komponente C 2 bis 7 Gew.-% umfasst. Dieses Gemisch wird bei etwa 80 bis 140 °C erhitzt und koaguliert. Das so erhaltene Produkt kann direkt als Lebensmittel verwendet, lange haltbar gelagert sowie durch Kochen, Braten, Rösten oder Trocknen weiterverarbeitet werden, um beispielsweise ein getrocknetes, tofuähnliches Lebensmittel zu erzeugen.

Aus CN 107 616 427 A ist eine Verarbeitungstechnologie für gepökeltes Hammelfleisch im Bereich der Fleischverarbeitung bekannt. Das Verfahren umfasst dabei folgende Schritte: Nach der Reinigung wird das frische Hammelfleisch in Streifen geschnitten; diese werden anschließend bei 1-3 °C für 48-60 Stunden unter Vakuum mit einer Pökelmischung aus Sauerkrautsuppe und Gewürzen gepökelt. Nach dem Pökeln werden Rückstände mit klarem Wasser entfernt, das Fleisch für 5-7 Stunden in weißem Spiritus (Baijiu) eingelegt, danach entnommen und für weitere 5-7 Stunden luftgetrocknet. Abschließend erfolgt ein Räuchervorgang über 26-30 Stunden mit Rauch aus der Verbrennung von Nadelholz. Die Schnittgröße des Fleisches ist dabei eng an die Pökelmischung sowie die Dauer des Pökelns und Räucherns angepasst. Durch das abgestimmte Zusammenspiel aller Verfahrensschritte erhält das gepökelte Hammelfleisch ein intensives Aroma, eine frische und zarte Textur ohne unerwünschten Geruch, ist nach dem Räuchern vollständig gegart, direkt verzehrfertig und zudem praktisch für den Transport.

Es ist daher die Aufgabe der vorliegenden Erfindung, ein Verfahren zum Herstellen eines Fleischersatzproduktes anzugeben, das es ermöglicht ein proteinreiches, fleischloses Produkt herzustellen, das ein Kaugefühl aufweist, das für Verbraucher, die an Fleischprodukte gewöhnt sind, angenehm und ansprechend ist und das in seiner Textur, seiner Knusprigkeit und seinem Kaugefühl, seiner Aromaausbildung und seiner Nährstoffzusammensetzung möglichst nahe an herkömmliche Fleischprodukte heranreicht.

Die Aufgabe wird durch ein Verfahren gelöst, das durch folgende Schritte gekennzeichnet ist:
a. Herstellen einer Zwischenproduktmasse, die Sojamehl, Sojaproteinisolat, Weizengluten, Sojafaser, Erbsenprotein, Kichererbsenmehl, Quinoamehl, Maisstärke, Reismehl und Leinsamen beinhaltet,
b. Abteilen von mehreren Zwischenproduktstücken aus der hergestellten Zwischenproduktmasse,
c. Kochen der Zwischenproduktstücke für einen Zeitraum im Bereich von 20 Minuten bis 40 Minuten, insbesondere 30 Minuten in Wasser,
d. Schneiden von Zwischenproduktstücke in eine Vielzahl von Streifen, die eine Dicke im Bereich von 1,5 mm bis 8 mm, insbesondere im Bereich von 2 mm bis 5 mm, aufweisen,
e. Marinieren der Streifen mit einer Marinade für einen Marinierzeitraum,
f. Trocknen der Streifen, vorzugsweise in einer Räucherkammer, für einen Trocknungszeitraum,
g. Räuchern der Streifen in der Räucherkammer für einen Räucherzeitraum,

In vorteilhafter Weise kann mit dem erfindungsgemäßen Verfahren ein Fleischersatzprodukt hergestellt werden, das als proteinreicher, fleischloser Streifen durch besondere Textur und die Möglichkeit einer pikanten Würzung hervortritt.

Anders als herkömmliche Fleischersatzprodukte zeichnet sich das erfindungsgemäße Fleischersatzprodukt durch eine eigenständige Geschmackskombination und ein Kaugefühl aus, das für Verbraucher, die an Fleischprodukte gewöhnt sind, angenehm und ansprechend ist. Damit bietet dieses Produkt eine attraktive Alternative zu traditionellen Fleischersatzlösungen und leistet einen wertvollen Beitrag zu einer nachhaltigeren Ernährung. Insbesondere das Kaugefühl, die Textur und die Knusprigkeit spielen eine wesentliche Rolle für die Akzeptanz bei den Verbrauchern. Diese Eigenschaften sind keine rein subjektiven Parameter, sondern können durch standardisierte, strukturierte sensorische Prüfungen mit geschulten Prüfern sowie insbesondere durch instrumentelle Analysen, beispielsweise unter Einsatz von Texture-Analyzern, Viskosimetern und Rheometern, objektiv erfasst und quantifiziert werden.

Das erfindungsgemäße Fleischersatzprodukt bietet bereits durch seine streifenförmige Form eine Reihe von Vorteilen sowohl für den Verbraucher als auch für die Herstellung. Die Streifenform ermöglicht eine einfache Handhabung und Portionierung. Verbraucher können die Streifen leicht in der gewünschten Menge entnehmen und verwenden, sei es für Snacks, Sandwiches oder als Zutat in verschiedenen Gerichten. Dies erleichtert die Kontrolle der Portionsgrößen und unterstützt eine ausgewogene Ernährung. Streifen lassen sich vielseitig in der Küche einsetzen. Sie können gebraten, gegrillt, gebacken oder in Salaten und Wraps verwendet werden. Diese Flexibilität macht sie zu einer praktischen Zutat für eine Vielzahl von Rezepten und kulinarischen Anwendungen. Die Streifenform bietet außerdem eine ansprechende Präsentation auf dem Teller. Sie lassen sich dekorativ anrichten und verleihen Gerichten eine visuell ansprechende Komponente. Dies kann die Akzeptanz des Produkts bei Verbrauchern erhöhen, die Wert auf die Ästhetik ihrer Mahlzeiten legen. Die Streifenform ermöglicht darüber hinaus eine effiziente Produktion, da die Zwischenproduktmasse leicht, insbesondere automatisiert, in gleichmäßige Stücke geschnitten werden kann. Dies führt zu einer hohen Produktionskapazität bei geringen Kosten. Streifen haben aufgrund ihrer Form und Dicke eine große Oberfläche im Verhältnis zu ihrem Volumen. Dies ermöglicht es, die verfahrensgemäßen Herstellungsschritte effizient auszuführen und dabei ein hinsichtlich des Kaugefühls und des Geschmacks besonders gutes Ergebnis zu erzielen. Die Prozesseffizienz wird u.a. auch durch die Streifenform verbessert, und es wird sichergestellt, dass alle Streifen die gewünschte Textur und den Geschmack erhalten. Durch die Streifenform kann außerdem die Marinade gleichmäßig und effizient eindringen, was zu einem intensiveren und konsistenteren Geschmack führt. Dies ist besonders wichtig, um sicherzustellen, dass jeder Streifen den vollen Geschmack der Marinade aufweist und ein harmonisches Geschmackserlebnis bietet. Nicht zuletzt erleichtert die Streifenform erleichtert das Verpacken des Endprodukts. Streifen können platzsparend und effizient in Verpackungen angeordnet werden, was die Logistik und den Transport vereinfacht. Dies trägt dazu bei, die Verpackungskosten zu senken und die Umweltbelastung durch effizientere Nutzung von Verpackungsmaterialien zu reduzieren.

Ein unerwarteter technische Effekt der Erfindung besteht darin, dass durch die besondere Kombination der Zutaten und die spezielle Abfolge der Prozessschritte (Kochen → Schneiden → Marinieren → Trocknen → Räuchern), ein Produkt entsteht, das ein fleischähnliches Kaugefühl, eine ausgeprägte, faserartige Textur und gleichzeitig eine hohe Aromenaufnahmefähigkeit zeigt - und das in einem Ausmaß, das im Lichte des Stands der Technik nicht zu erwarten war. Zwar sind die in der Zwischenproduktmasse enthaltenen Zutaten als solche bekannt. Jedoch beinhaltet der Stand der Technik keinen Hinweis auf die synergistische Wirkung dieser Kombination im Hinblick auf Textur, Struktur und Aromabindung, des erfindungsgemäßen Fleischersatzproduktes.

Beispielsweise war es nicht vorhersehbar, dass insbesondere die Zugabe von Quinoamehl und Leinsamen in geringen Mengen gemeinsam mit Weizengluten und Sojaproteinisolat zu einer fleischähnlichen, schichtartigen Struktur führt, war nicht vorhersehbar.

Die beanspruchte Zusammensetzung und Verfahrensführung führt zu signifikant anderen Werten bei texturmechanischen Messungen (z. B. im Texture Analyzer), etwa in Bezug auf Härte, Elastizität oder Frakturverhalten. Solche quantitativen Unterschiede lassen sich nicht allein durch die Anwesenheit einzelner Zutaten erklären, sondern ergeben sich aus der synergistischen Wirkung der Gesamtkomposition und Prozessführung.

Der vorteilhafte und unerwartete Effekt der Erfindung beruht weder auf bloßem Versuch-und-Irrtum noch auf fachüblichem Optimieren einzelner Zutaten, sondern auf einer funktionellen Kombination verschiedener pflanzlicher Rohstoffe und einer speziell darauf abgestimmten Prozessfolge. Dieses Zusammenwirken führt zu einem Ergebnis, das in der Gesamtheit überraschend ist.

Das erfindungsgemäße Fleischersatzprodukt kann vorteilhaft eine durchschnittliche Scherfestigkeit von mehr als 1.500 Gramm, insbesondere von mehr als 2.000 Gramm, ganz insbesondere von mehr als 2.600 Gramm, aufweisen, gemessen mit der in EP 2 364 601 B1 beschriebenen Messmethode.

Der Begriff "Scherfestigkeit" bezeichnet hier die Fähigkeit eines texturierten Proteins, ein faseriges Netzwerk mit einer Festigkeit zu bilden, die hoch genug ist, um einem geformten Produkt eine fleischähnliche Textur und ein fleischähnliches Aussehen zu verleihen. Die Scherfestigkeit wird in Gramm gemessen.

Die Scherfestigkeit einer Probe wird in Gramm gemessen und kann durch das folgende Verfahren bestimmt werden. Zunächst wird eine Probe des strukturierten Proteinprodukts abgewogen und in einen heißversiegelbaren Beutel gegeben. Anschließend wird die Probe mit etwa der dreifachen Menge ihres Gewichts an Leitungswasser bei Raumtemperatur hydratisiert. Der Beutel wird auf einen Druck von etwa 0,01 bar evakuiert und verschlossen. Danach lässt man die Probe für etwa 12 bis 24 Stunden hydratisieren. Nach der Hydratation wird die Probe entnommen und auf der Grundplatte eines Texturanalysators so positioniert, dass ein Messer den Durchmesser der Probe durchschneiden kann. Dabei ist die Probe unter dem Messer so auszurichten, dass der Schnitt senkrecht zur Längsachse des strukturierten Stücks erfolgt. Ein geeignetes Messer zum Schneiden des Extrudats ist beispielsweise das Modell TA-45 (Schneidezahnklinge) von Texture Technologies (USA). Als geeigneter Texturanalysator kann etwa das Modell TA, TXT2 von Stable Micro Systems Ltd. (England) verwendet werden, ausgestattet mit einer Last von 25, 50 oder 100 Kilogramm.

Im Rahmen dieses Tests versteht man unter der Scherfestigkeit die maximale Kraft in Gramm, die erforderlich ist, um die Probe zu scheren.

Ein Verfahren zur Bestimmung der Scherfestigkeit kann wie folgt durchgeführt werden: Zunächst werden etwa 150 Gramm eines strukturierten Proteinprodukts abgewogen, wobei ausschließlich ganze Stücke verwendet werden dürfen. Die Probe wird in einen heißversiegelbaren Plastikbeutel gegeben, dem etwa 450 Gramm Wasser mit einer Temperatur von 25 °C zugegeben werden. Anschließend wird der Beutel bei etwa 150 mm Hg vakuumiert, und der Inhalt etwa 60 Minuten lang hydratisiert. Die hydratisierte Probe wird sodann in die Schüssel eines Kitchen-Aid-Mixers, Modell KM14G0, gegeben, der mit einem Einblatt-Rührwerk ausgestattet ist. Die Probe wird zwei Minuten lang bei 130 U/min gemischt. Anschließend werden das Rührwerk und die Seitenwände der Schüssel abgestrichen, und die Abstriche zurück auf den Boden der Schüssel gegeben. Dieser Misch- und Abstreifvorgang wird insgesamt dreimal durchgeführt. Aus der so behandelten Mischung werden etwa 200 g entnommen. Diese Teilmenge wird so getrennt, dass alle Fasern oder langen Stränge, die länger als 2,5 cm sind, von der zerkleinerten Mischung getrennt werden. Das Gewicht der getrennten Fasern wird bestimmt, durch das Ausgangsgewicht (z. B. etwa 200 g) dividiert und mit 100 multipliziert. Der resultierende Wert stellt den Prozentsatz der großen Stücke in der Probe dar. Liegt dieser Wert unter 15 % oder über 20 %, ist der Test abgeschlossen. Liegt der Wert zwischen 15 % und 20 %, werden weitere ca. 200 g aus der Schüssel abgewogen, die Fasern oder langen Stränge, die länger als 2,5 cm sind, erneut getrennt, und die Berechnungen wie zuvor wiederholt.

Die Zwischenproduktmasse ist eine Mischung aus Sojamehl, Sojaproteinisolat, Weizengluten, Sojafaser, Erbsenprotein, Kichererbsenmehl, Quinoamehl, Maisstärke, Reismehl und Leinsamen. Diese Kombination bietet eine ausgewogene Proteinquelle und trägt zur gewünschten Textur des Endprodukts bei. Die Auswahl dieser Zutaten gewährleistet, dass das Produkt reich an essentiellen Aminosäuren ist und eine angenehme Textur bietet, die für Fleischesser ansprechend ist.

In einer bevorzugten Ausführungsform umfasst die Zwischenproduktmasse Wasser in einem Anteil von etwa 30 bis 50 Gew.-%, insbesondere etwa 40 Gew.-%, bezogen auf das Gesamtgewicht der Zwischenproduktmasse. Die restlichen 50 bis 70 Gew.-% können sich vorteilhaft wie folgt zusammensetzen: Die Zwischenproduktmasse enthält vorteilhaft Sojamehl in einem Anteil von etwa 10 bis 25 Gew.-%, Sojaproteinisolat in einem Anteil von etwa 10 bis 20 Gew.-%, sowie Weizengluten in einem Anteil von etwa 10 bis 25 Gew.-%. Die Zwischenproduktmasse beinhaltet zusätzlich Erbsenprotein in einem Anteil von etwa 5 bis 10 Gew.-%, Sojafasern in einem Anteil von etwa 7 bis 20 Gew.-% sowie Leinsamen (vorzugsweise gemahlen) in einem Anteil von etwa 1 bis 5 Gew.-%. Außerdem beinhaltet die Zwischenproduktmasse Kichererbsenmehl in einem Anteil von etwa 2 bis 8 Gew.-%, Quinoamehl in einem Anteil von etwa 2 bis 6 Gew.-%, Reismehl in einem Anteil von etwa 2 bis 8 Gew.-% sowie Maisstärke in einem Anteil von etwa 2 bis 7 Gew.-%. Darüber hinaus können der Zwischenproduktmasse Gewürze, pflanzliche Aromen oder weitere geschmacksgebende Bestandteile in geeigneten Mengen zugesetzt sein, wobei der Gesamtgehalt dieser Zusätze typischerweise im Bereich von 1 bis 5 Gew.-% liegt. Die Gewürze können je nach gewünschtem Geschmacksprofil ausgewählt und unmittelbar in die Zwischenproduktmasse eingearbeitet oder erst im Rahmen der späteren Marinierung zugeführt werden. Die genannte Zusammensetzung ergibt eine homogene, formbare Zwischenproduktmasse, die sich vorteilhaft zu Zwischenproduktstücken verarbeiten lässt und eine gute Grundlage für die angestrebte Textur, das Kaugefühl und die Aufnahme von Marinade bietet.

Die beschriebene Zusammensetzung der Zwischenproduktmasse in Kombination mit den spezifischen Verfahrensschritten führt zu einem Fleischersatzprodukt mit mehreren vorteilhaften technischen Eigenschaften.

Insbesondere durch die gezielte Kombination von Sojaproteinisolat, Weizengluten und Erbsenprotein mit faser- und stärkehaltigen Bestandteilen, nämlich Sojafasern, Leinsamen, Quinoamehl und Maisstärke, entsteht beim Kochen und anschließenden Schneiden, Marinieren, Trocknen und Räuchern eine streifenförmige Struktur mit fleischähnlichem Biss. Diese texturmechanischen Eigenschaften lassen sich quantitativ erfassen, etwa mittels mechanischer Texturanalyse (z. B. mit einem Texture Analyzer). Dabei können objektiv messbare Parameter wie Härte, Elastizität, Kohäsion, Frakturverhalten oder Schnittfestigkeit bestimmt werden. Die so analysierte Textur zeigt bei Produkten gemäß der beanspruchten Zusammensetzung und Prozessführung signifikant höhere Werte im Hinblick auf Kaugefühl-relevante Parameter im Vergleich zu Produkten nach dem nächstliegenden Stand der Technik, bei denen bestimmte protein- oder faserreiche Zutaten fehlen.

Die erfindungsgemäße Reihenfolge der Prozessschritte - insbesondere das Kochen vor dem Schneiden, gefolgt vom Marinieren - fördert außerdem eine gleichmäßige Aufnahme der Marinade und ihrer Aromen. Stärkehaltige Zutaten wie Maisstärke und Reismehl sowie Leinsamen wirken zusätzlich bindend, was letztlich ebenfalls für eine das angestrebte Kaugefühl fördernde Textur vorteilhaft ist. Der Wasseranteil von etwa 40 Gew.-% erzeugt eine formbare, aber stabile Masse, die sich problemlos in Teilstücke abteilen und weiterverarbeiten lässt. Diese Balance zwischen Bindung und Formbarkeit kann ebenfalls messbar gemacht werden, etwa über Rheologiemessungen (z. B. Fließverhalten, Viskosität, Verformungsresistenz der feuchten Masse).

Bei einer vorteilhaften Ausführungsform wird die Zwischenproduktmasse (bezogen auf eine Gesamtmasse von 1.000 g) wie folgt hergestellt:
In einem besonders vorteilhaften Ausführungsbeispiel umfasst die Zwischenproduktmasse 400 g Wasser, 188 g Sojamehl, 140 g Sojaproteinisolat, 188 g Weizengluten, 66 g Erbsenprotein, 94 g Sojafasern, 18 g gemahlenen Leinsamen, 28 g Kichererbsenmehl, 14 g Quinoamehl, 10 g Reismehl, 5 g Maisstärke sowie 27 g Gewürze und pflanzliche Aromen. Insbesondere durch den relativ hohen Anteil an Sojafasern und Leinsamen entsteht bei diesem Ausführungsbeispiel eine Textur, die das Kaugefühl besonders natürlich und fleischig wirken lässt.

In einem anderen Beispiel enthält die Zwischenproduktmasse ebenfalls 400 g Wasser, 180 g Sojamehl, 130 g Sojaproteinisolat, 170 g Weizengluten, 60 g Erbsenprotein, 90 g Sojafasern, 15 g gemahlenen Leinsamen, 33 g Kichererbsenmehl, 23 g Quinoamehl, 23 g Reismehl, 18 g Maisstärke und 28 g Gewürze und pflanzliche Aromen.

Ein weiteres Beispiel sieht 400 g Wasser, 195 g Sojamehl, 135 g Sojaproteinisolat, 160 g Weizengluten, 55 g Erbsenprotein, 85 g Sojafasern, 12 g gemahlenen Leinsamen, 20 g Kichererbsenmehl, 18 g Quinoamehl, 13 g Reismehl, 13 g Maisstärke sowie 29 g Gewürze und pflanzliche Aromen vor.

Die Zutaten werden jeweils zu einer homogenen Zwischenproduktmasse vermengt und zu Zwischenproduktstücken verarbeitet.

Durch das Abteilen von mehreren Zwischenproduktstücken aus der hergestellten Zwischenproduktmasse wird eine effiziente Weiterverarbeitung ermöglicht. Die Zwischenproduktstücke sind vorzugsweise derart groß, dass jedes Zwischenproduktstück ausschließlich durch parallele Schnitte in die Streifen geschnitten werden kann, ohne dass zusätzliche Schnitte erforderlich sind. Insbesondere können die Zwischenproduktstücke quaderförmig ausgebildet sein und eine Höhe aufweisen, die der Breite der Streifen entspricht, und eine Breite, die der Länge der Streifen entspricht.

Die Zwischenproduktstücke werden für einen Zeitraum im Bereich von 20 Minuten bis 40 Minuten, insbesondere 30 Minuten, in Wasser gekocht werden. Dieser Schritt dient dazu, die Zutaten zu hydratisieren und die Proteine zu denaturieren, was zur Entwicklung der gewünschten Textur beiträgt.

Das Verfahren beinhaltet das Schneiden jedes der Zwischenproduktstücke in eine Vielzahl von Streifen, die eine Dicke im Bereich von 1,5 mm bis 8 mm, insbesondere im Bereich von 2 mm bis 5 mm, aufweisen. Durch diese Dicke wird ein Kaugefühl erzeugt, das von Fleischessern als angenehm empfunden wird. Durch die vorzugsweise gleichmäßige Dicke der Streifen wird insbesondere ein konsistentes Kaugefühl gewährleistet. Dies ist besonders wichtig, da Verbraucher, die an Fleischprodukte gewöhnt sind, eine bestimmte Textur erwarten. Die Streifenform trägt dazu bei, ein angenehmes Kaugefühl zu erzeugen, welches an die Erfahrung beim Verzehr von Fleisch anknüpft ohne dies zu imitieren.

In einem weiteren Schritt werden die Streifen mit einer Marinade für einen Marinierzeitraum behandelt. Dies verleiht den Streifen Geschmack und hilft, die Textur zu verbessern. Die Marinade kann dabei spezifische Aromen enthalten, die das Endprodukt besonders schmackhaft machen.

In ganz besonders vorteilhafter Weise umfasst das Verfahren das Trocknen der Streifen, vorzugsweise in einer Räucherkammer, für einen Trocknungszeitraum umfassen. Dieser Schritt reduziert den Wassergehalt und trägt zur Haltbarkeit und der festen Textur des Produkts bei. Das Trocknen der fleischlosen Streifen im Räucherofen bietet mehrere entscheidende Vorteile gegenüber anderen Trocknungsmethoden. Diese Vorteile betreffen sowohl die Qualität des Endprodukts als auch die Effizienz und Konsistenz des Herstellungsprozesses. Räucheröfen sind darauf ausgelegt, eine gleichmäßige Temperaturverteilung im gesamten Innenraum zu gewährleisten. Dies stellt sicher, dass alle Streifen gleichmäßig getrocknet werden, was zu einer konsistenten Textur und Qualität des Endprodukts führt. Eine gleichmäßige Trocknung verhindert das Risiko von ungleichmäßig getrockneten Partien, die zu einem unerwünschten Mundgefühl führen könnten. Räucheröfen ermöglichen eine präzise Steuerung der Feuchtigkeitsabfuhr. Dies ist besonders wichtig, um die richtige Balance zwischen Trockenheit und Restfeuchte zu erzielen, die für die gewünschte Textur und Haltbarkeit des Produkts entscheidend ist. Das Trocknen im Räucherofen trägt dazu bei, eine feste, jedoch nicht zu trockene Textur zu erzeugen. Dies ist besonders wichtig, um ein angenehmes Kaugefühl zu gewährleisten, das von Fleischessern als positiv empfunden wird. Durch die gleichmäßige Trocknung im Räucherofen wird die Gefahr einer übermäßigen Zähigkeit minimiert, was das Produkt insgesamt zarter und angenehmer im Biss macht. Die Möglichkeit, Trocknung und Räucherung in einem einzigen Gerät durchzuführen, spart Zeit und Ressourcen. Dies macht den Herstellungsprozess effizienter und reduziert die Notwendigkeit zusätzlicher Geräte oder Arbeitsschritte.

Erfindungsgemäß werden die Streifen in der Räucherkammer für einen Räucherzeitraum geräuchert. Das Räuchern, das insbesondere mit Naturholzspänen erfolgen kann, verleiht den Streifen ein charakteristisches Aroma und trägt zur Geschmacksvielfalt bei. Das Räuchern verleiht dem erfindungsgemäßen Fleischersatzprodukt ein charakteristisches, rauchiges Aroma, das das Produkt von anderen fleischlosen Alternativen abhebt.

Das Verfahren beinhaltet vorzugsweise einen Marinierzeitraum im Bereich von 10 Stunden bis 18 Stunden, insbesondere im Bereich von 12 Stunden bis 16 Stunden. Ein Marinierzeitraum von 10 bis 18 Stunden, insbesondere von 12 Stunden bis 16 Stunden, bietet eine optimale Balance zwischen Geschmackseinlagerung und Texturentwicklung. Diese Dauer ist besonders vorteilhaft für die fleischlosen Streifen aus mehreren Gründen: Ein Marinierzeitraum von 10 bis 18 Stunden ermöglicht es den Gewürzen und Aromen, tief in die Streifen einzudringen. Dies sorgt für ein intensives und gleichmäßiges Geschmacksprofil, das von den Verbrauchern als besonders schmackhaft empfunden wird. Die Einwirkzeit stellt sicher, dass die Marinade gleichmäßig verteilt wird und nicht nur an der Oberfläche verbleibt. Dies führt zu einem vollmundigen Geschmack in jedem Bissen. Die Einwirkung der Marinade über 10 bis 18 Stunden hilft außerdem, die Proteine in den Streifen zu lockern und die gewünschte Textur zu entwickeln. Dies trägt zu einem angenehmen Kaugefühl bei, das an die Konsistenz von Fleisch erinnert, ohne zu weich oder zu zäh zu sein. Der Marinierzeitraum von 10 bis 18 Stunden, insbesondere von 12 Stunden bis 16 Stunden, Zeitspanne erlaubt außerdem eine ausreichende Hydratisierung der pflanzlichen Zutaten, was zu einer saftigen und zarten Textur führt.

Ein kürzerer Marinierzeitraum würde hingegen bedeuten, dass die Aromen nur die äußeren Schichten der Streifen durchdringen. Dies führt zu einem ungleichmäßigen Geschmack, bei dem die äußeren Schichten stark gewürzt sind, während das Innere fade bleibt. Die Aromen hätten nicht genügend Zeit, um vollständig in das Produkt einzuziehen, was zu einem weniger intensiven Geschmackserlebnis führen würde. Bei einem kürzeren Marinierzeitraum wäre die Textur der Streifen härter und weniger angenehm im Biss. Ein kurzer Marinierzeitraum würde außerdem dazu führen, dass die Streifen nicht ausreichend hydratisiert sind, was im Ergebnis zu einer trockeneren Konsistenz führt.

Ein zu langer Marinierzeitraum von mehr als 18 Stunden kann dazu führen, dass die Streifen zu weich und matschig werden. Die Proteine und Fasern würden zu stark abgebaut, was die Struktur des Produkts beeinträchtigt. Bei einem zu langen Marinierzeitraum können die Aromen außerdem zu intensiv werden und das natürliche Geschmacksprofil der Zutaten überdecken. Dies könnte zu einem überwältigenden und unangenehmen Geschmack führen. Insbesondere können bestimmte Aromen zu stark hervortreten, während andere unterdrückt werden, was zu einem unausgewogenen Geschmackserlebnis führt.

Bei einer vorteilhaften Ausführung erfolgt das Marinieren bei einer Temperatur im Bereich von 0 Grad Celsius bis 6 Grad Celsius, insbesondere im Bereich von 0 Grad Celsius bis 4 Grad Celsius. Die niedrige Temperatur verhindert das Wachstum unerwünschter Mikroorganismen und sorgt dafür, dass die Textur des Produkts erhalten bleibt.

Das Verfahren kann vorteilhaft einen Trocknungszeitraum im Bereich von 30 Minuten bis 50 Minuten, insbesondere 40 Minuten, aufweisen. Eine optimale Trocknungsdauer gewährleistet die richtige Balance zwischen Trockenheit und Feuchtigkeit im Endprodukt. Die Trocknung kann vorteilhaft in einem Ofen bei einer Trocknungstemperatur von 60 Grad Celsius erfolgen.

Bei einer vorteilhaften Ausführung liegt der Räucherzeitraum im Bereich von 30 Minuten bis 50 Minuten, insbesondere 40 Minuten. Ein optimaler Räucherzeitraum sorgt für ein ausgewogenes Raucharoma ohne das Produkt zu überwältigen.

Besonders vorteilhaft ist eine Ausführung, bei der das Räuchern mit Naturholzspänen erfolgt. Naturholzspäne verleihen dem Produkt ein authentisches Raucharoma, das von vielen Verbrauchern geschätzt wird.

Das Verfahren kann vorteilhaft Naturholzspäne mit der Körnung 2-16 aufweisen. Diese Körnung sorgt für eine gleichmäßige Rauchentwicklung und ein intensives Aroma. Insbesondere können die Naturholzspäne derart ausgebildet sein, dass sie keine Außenabmessung aufweisen, die kleiner als 2 mm ist und dass sie keine Außenabmessung aufweisen, die größer als 16 mm ist.

Bei einer vorteilhaften Ausführung werden die Streifen nach dem Marinieren und vor dem Trocknen für einen Tumblezeitraum und bei einer Tumbletemperatur in einem Tumbler, insbesondere einem Vakuumtumbler, getumbelt. Das Tumbeln verbessert die Textur und sorgt dafür, dass die Marinade gleichmäßig verteilt wird. Der Tumbler kann eine rotierende Trommel aufweisen, in die Steifen, insbesondere zusammen mit einer Marinade und/oder anderen Zutaten, eingefüllt werden. Während die Trommel rotiert, werden die Streifen kontinuierlich umgewälzt und durchmischt, wodurch die Marinade gleichmäßig in die Produkte einzieht und die Zutaten gründlich miteinander vermischt werden. Das Tumbeln verbessert die Textur der Streifen, indem es die Proteine und Fasern auflockert und die Feuchtigkeit gleichmäßig verteilt, was zu einer zarten und saftigen Konsistenz führt. Schließlich hilft das Tumbeln, Luftblasen aus der Mischung zu entfernen, was die Dichte und Homogenität der Streifen verbessert und die mikrobiologische Sicherheit erhöht.

Das Verfahren kann vorteilhaft einen Tumblezeitraum im Bereich von 10 Minuten bis 20 Minuten, insbesondere bei 15 Minuten, aufweisen. Ein optimaler Tumblezeitraum gewährleistet, dass die Textur des Produkts verbessert wird, ohne dass es zu weich wird.

Besonders vorteilhaft ist eine Ausführung, bei der die Tumbletemperatur im Bereich von 0 Grad Celsius bis 6 Grad Celsius, insbesondere im Bereich von 0 Grad Celsius bis 4 Grad Celsius, liegt. Eine niedrige Tumbletemperatur trägt zur Texturstabilität bei und verhindert mikrobiellen Verderb.

Das Verfahren kann vorteilhaft das Benetzen der Streifen nach dem Räuchern mit einer Soße umfassen. Diese Soße kann Wasser, Essig, Jaggery und/oder Zucker, Tomatenpaste, Salz und Tamarinde beinhalten. Dies verleiht den Streifen zusätzlichen Geschmack und Feuchtigkeit.

Die Tamarinde bietet durch ihr einzigartiges Geschmacksprofil, ihre feuchtigkeitsspendenden und texturverbessernden Eigenschaften sowie ihre natürlichen konservierenden und ernährungsphysiologischen Vorteile einen besonderen Mehrwert für das Fleischersatzprodukt. Diese vielfältigen Vorteile tragen dazu bei, ein hochwertiges, schmackhaftes und gesundes Fleischersatzprodukt zu schaffen, das den Anforderungen und Erwartungen der Verbraucher gerecht wird. Tamarinde verleiht dem Fleischersatzprodukt eine charakteristische säuerliche Note, die den Geschmack der Streifen bereichert und ihnen eine komplexe Geschmacksdimension hinzufügt. Diese Säure kann die Aromen der anderen Gewürze und Zutaten verstärken und das gesamte Geschmackserlebnis abrunden. Neben der Säure bringt Tamarinde auch eine subtile, fruchtige Süße mit sich, die das Geschmacksprofil harmonisch ergänzt. Diese ausgewogene Kombination aus Süße und Säure kann den Geschmack der fleischlosen Streifen attraktiver machen und dazu beitragen, dass sie von Verbrauchern, die an Fleisch gewöhnt sind, als schmackhaft empfunden werden. Tamarinde hat außerdem hygroskopische Eigenschaften, was bedeutet, dass sie Feuchtigkeit anziehen und binden kann. Dies hilft, die Streifen saftig zu halten. Eine saftige Textur ist entscheidend, um ein angenehmes Kaugefühl zu gewährleisten.

Bei einer vorteilhaften Ausführung erfolgt nach dem Benetzen mit der Soße ein weiteres Trocknen der Streifen für einen weiteren Trocknungszeitraum bei einer weiteren Trocknungstemperatur. Dies stellt sicher, dass die Soße gut in die Streifen eindringt und eine angenehme Textur erzeugt wird. Besonders vorteilhaft ist eine Ausführung, bei der das weitere Trocknen in dem Räucherofen erfolgt. Dies ermöglicht eine gleichmäßige Trocknung und intensives Aroma.

Der weiteren Trocknungszeitraum kann vorteilhaft im Bereich von 60 Minuten bis 120 Minuten, insbesondere 90 Minuten, liegen. Ein optimaler Trocknungszeitraum garantiert die gewünschte Konsistenz und Haltbarkeit.

Bei einer vorteilhaften Ausführung liegt die Trocknungstemperatur im Bereich von 50 Grad Celsius bis 70 Grad Celsius, oder die Trocknungstemperatur beträgt 60 Grad Celsius. Dies stellt sicher, dass die Streifen gleichmäßig getrocknet werden und eine angenehme Textur aufweisen.

Das Verfahren kann vorteilhaft das Kühlen und Bestreuen der Streifen mit trockenen Chiliflocken umfassen. Dies verleiht dem Produkt eine pikante Note und sorgt für eine ansprechende Optik.

Zusätzlich kann anschließend eine Dehydrierung bei 80 Grad Celsius bis 90 Grad Celsius, insbesondere bei 90 Grad Celsius, erfolgen.

Bei einer vorteilhaften Ausführung weisen die Streifen eine Länge im Bereich von 5 cm bis 15 cm auf. Dies bietet eine praktische Größe für den Verzehr und die Verpackung. Alternativ oder zusätzlich können die Streifen vorteilhaft eine Breite im Bereich von 2 cm bis 5 cm aufweisen. Dies sorgt für eine angenehme Mundfülle und verbessert das Kaugefühl.

Besonders vorteilhaft ist eine Ausführung, bei der das Herstellen der Zwischenproduktmasse beinhaltet, dass Sojamehl, Sojaproteinisolat, Weizengluten, Sojafaser, Erbsenprotein, Kichererbsenmehl, Quinoamehl, Maisstärke, Reismehl und Leinsamen mit Öl, insbesondere Sonnenblumenöl, in einem Cutter gleichmäßig vermengt werden. Dies verbessert die Konsistenz und den Geschmack der Zwischenproduktmasse.

Ein nach dem erfindungsgemäßen Verfahren hergestelltes Fleischersatzprodukt bietet zahlreiche Vorteile, darunter eine ausgewogene Nährstoffzusammensetzung, eine genehme Textur und ein einzigartiges Geschmackserlebnis, das für Verbraucher attraktiv ist, die eine Alternative zu traditionellen Fleischprodukten suchen.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: eine Illustration eines Ausführungsbeispiels eines erfindungsgemäßen Verfahrens, und
- Fig. 2: eine Illustration eines weiteren Ausführungsbeispiels eines erfindungsgemäßen Verfahrens.

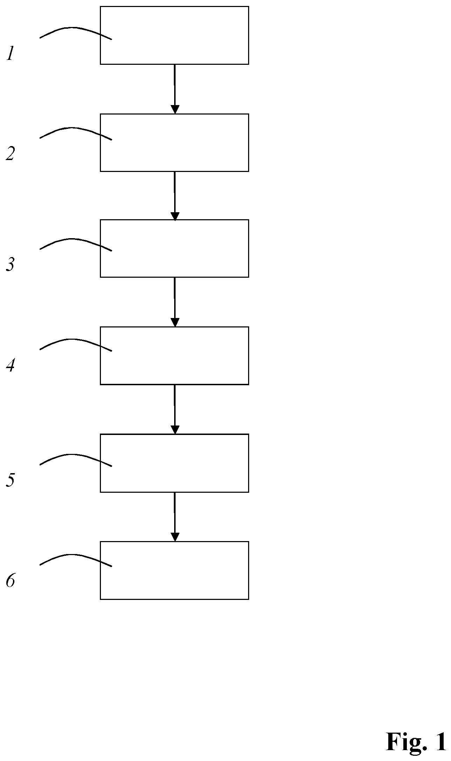

Fig. 1 zeigt eine Illustration eines Ausführungsbeispiels eines erfindungsgemäßen Verfahrens.

Das Verfahren beinhaltet den Schritt des Herstellens 1 einer Zwischenproduktmasse, die Sojamehl, Sojaproteinisolat, Weizengluten, Sojafaser, Erbsenprotein, Kichererbsenmehl, Quinoamehl, Maisstärke, Reismehl und Leinsamen beinhaltet.

Das Verfahren beinhaltet außerdem den Schritt des Abteilens 2 von mehreren Zwischenproduktstücken aus der hergestellten Zwischenproduktmasse.

Das Verfahren beinhaltet darüber hinaus den Schritt des Kochens 3 der Zwischenproduktstücke für einen Zeitraum im Bereich von 20 Minuten bis 40 Minuten, insbesondere 30 Minuten in Wasser.

Danach erfolgt ein Marinieren 4 der Streifen mit einer Marinade für einen Marinierzeitraum.

Danach erfolgt der Schritt des Trocknens 5 der Streifen, vorzugsweise in einer Räucherkammer, für einen Trocknungszeitraum.

Danach erfolgt der Schritt des Räucherns 6 der Streifen in der Räucherkammer für einen Räucherzeitraum.

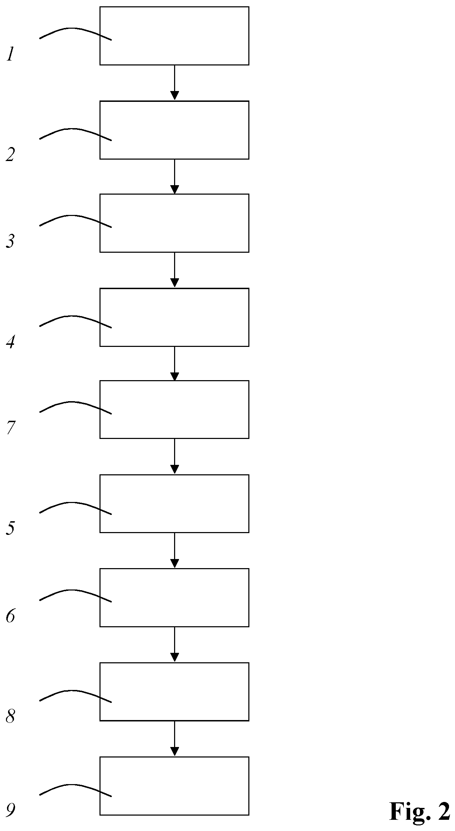

Die Figur 2 zeigt eine Illustration eines weiteren Ausführungsbeispiels eines erfindungsgemäßen Verfahrens.

Das Verfahren unterscheidet sich von dem in Figur 1 illustrierten Verfahren dadurch, dass die Streifen nach dem Marinieren 4 und vor dem Trocknen 5 für einen Tumblezeitraum und bei einer Tumbletemperatur in einem Tumbler ein Tumbeln 7 erfolgt.

Das Verfahren unterscheidet sich von dem in Figur 1 illustrierten Verfahren dadurch, dass nach dem Räuchern 6 ein Benetzen 8 der Streifen mit einer Soße erfolgt und dass danach ein weiteres Trocknen 9 der Streifen für einen weiteren Trocknungszeitraum bei einer weiteren Trocknungstemperatur erfolgt.

### Bezugszeichenliste:

- 1: Herstellen einer Zwischenproduktmasse
- 2: Abteilen von mehreren Zwischenproduktstücken
- 3: Kochens der Zwischenproduktstücke
- 4: Marinieren
- 5: Trocknen
- 6: Räuchern
- 7: Tumbeln
- 8: Benetzen
- 9: weiteres Trocknen

## Patentansprüche

1. Verfahren zum Herstellen eines Fleischersatzproduktes, **gekennzeichnet durch** folgende Schritte:
a. Herstellen einer Zwischenproduktmasse, die Sojamehl, Sojaproteinisolat, Weizengluten, Sojafaser, Erbsenprotein, Kichererbsenmehl, Quinoamehl, Maisstärke, Reismehl und Leinsamen beinhaltet,
b. Abteilen von mehreren Zwischenproduktstücken aus der hergestellten Zwischenproduktmasse,
c. Kochen der Zwischenproduktstücke für einen Zeitraum im Bereich von 20 Minuten bis 40 Minuten, insbesondere 30 Minuten in Wasser,
d. Schneiden von Zwischenproduktstücke in eine Vielzahl von Streifen, die eine Dicke im Bereich von 1,5 mm bis 8 mm, insbesondere im Bereich von 2 mm bis 5 mm, aufweisen,
e. Marinieren der Streifen mit einer Marinade für einen Marinierzeitraum,
f. Trocknen der Streifen, vorzugsweise in einer Räucherkammer, für einen Trocknungszeitraum,
g. Räuchern der Streifen in der Räucherkammer für einen Räucherzeitraum.

2. Verfahren nach Anspruch 1, **dadurch gekennzeichnet, dass**
a. der Marinierzeitraum im Bereich von 10 Stunden bis 18 Stunden, insbesondere im Bereich von 12 Stunden bis16 Stunden, liegt, und/oder dass
b. das Marinieren bei einer Temperatur im Bereich von 0 Grad Celsius bis 6 Grad Celsius, insbesondere im Bereich von 0 Grad Celsius bis 4 Grad Celsius, erfolgt.

3. Verfahren nach Anspruch 1 oder 2, **dadurch gekennzeichnet, dass** der Trocknungszeitraum im Bereich von 30 Minuten bis 50 Minuten liegt, oder 40 Minuten beträgt.

4. Verfahren nach einem der Ansprüche 1 bis 3, **dadurch gekennzeichnet, dass** der Räucherzeitraum im Bereich von 30 Minuten bis 50 Minuten liegt oder 40 Minuten beträgt.

5. Verfahren nach einem der Ansprüche 1 bis 4, **dadurch gekennzeichnet, dass** das Räuchern mit Naturholzspänen, insbesondere mit Naturholzspänen einer Körnung von 2-16, erfolgt.

6. Verfahren nach einem der Ansprüche 1 bis 5, **dadurch gekennzeichnet, dass** die Streifen nach dem Marinieren und vor dem Trocknen für einen Tumblezeitraum und bei einer Tumbletemperatur in einem Tumbler, insbesondere einem Vakuumtumbler, getumbelt werden.

7. Verfahren nach Anspruch 6, **dadurch gekennzeichnet, dass**
a. der Tumplezeitzeitraum im Bereich von 10 Minuten bis 20 Minuten, insbesondere bei 15 Minuten, liegt, und/oder dass
b. die Tumbletemperatur im Bereich von 0 Grad Celsius bis 6 Grad Celsius, insbesondere im Bereich von 0 Grad Celsius bis 4 Grad Celsius, liegt.

8. Verfahren nach einem der Ansprüche 1 bis 7, **dadurch gekennzeichnet, dass** die Streifen nach dem Räuchern mit einer Soße benetzt werden.

9. Verfahren nach Anspruch 8, **dadurch gekennzeichnet, dass** die Soße Wasser, Essig, Jaggery und/oder Zucker, Tomatenpaste, Salz und Tamarinde beinhaltet.

10. Verfahren nach Anspruch 8 oder 9, **dadurch gekennzeichnet, dass** nach dem Benetzen mit der Soße ein weiteres Trocknen der Streifen für einen weiteren Trocknungszeitraum bei einer weiteren Trocknungstemperatur erfolgt.

11. Verfahren nach Anspruch 10, **dadurch gekennzeichnet, dass** das Verfahren wenigstens eines der folgenden Merkmale a bis c aufweist:
a. das weitere Trocknen erfolgt in dem Räucherofen,
b. der weitere Trocknungszeitraum beträgt im Bereich von 60 Minuten bis 120 Minuten liegt oder 90 Minuten,
c. die Trocknungstemperatur liegt bei dem weiteren Trocknen im Bereich von 50 Grad Celsius bis 70 Grad Celsius oder beträgt 60 Grad Celsius.

12. Verfahren nach einem der Ansprüche 1 bis 11, **dadurch gekennzeichnet, dass** die Streifen gekühlt und mit trockenen Chiliflocken bestreut werden.

13. Verfahren nach einem der Ansprüche 1 bis 12, **dadurch gekennzeichnet, dass**
a. die Streifen eine Länge im Bereich von 5 cm bis 15 cm aufweisen, und/oder dass
b. die Streifen eine Breite im Bereich von 2 cm bis 5 cm aufweisen.

14. Verfahren nach einem der Ansprüche 1 bis 13, **dadurch gekennzeichnet, dass** das Herstellen der Zwischenproduktmasse beinhaltet, Eis, Sojamehl, Sojaproteinisolat, Weizengluten, Sojafaser, Erbsenprotein, Kichererbsenmehl, Quinoamehl, Maisstärke, Reismehl und Leinsamen mit Öl, insbesondere Sonnenblumenöl, in einem Cutter gleichmäßig zu vermengen.

15. Fleischersatzprodukt, hergestellt nach einem Verfahren nach einem der Ansprüche 1 bis 14.
